# EUROPEAN PATENT APPLICATION

(11) **EP 3 290 792 A1**
(43) Date of publication of application: **07.03.2018**
(21) Application number: 16186357.6
(22) Date of filing: 30.08.2016
(51) Int. Cl.: F23J 3/04, F23J 15/02, B01D 46/12

(54) **SCR-SYSTEM FOR REMOVING ASH FROM A FLUE GAS STREAM GENERATED IN A COMBUSTION SYSTEM**

(71) Applicant: YARA International ASA, 0277 Oslo (NO)
(72) Inventor: Ryba, Manfred, 1210 Vienna (AT); Bors, Walter, 1210 Vienna (AT); Szlapa, Mateusz, 43-200 Pszczyna (PL)
(74) Representative: Gyi, Jeffrey Ivan

(57) **Abstract**

The invention relates to an SCR (selective catalytic reduction)-system (7) for a combustion system having a combustion chamber and an arrangement of ducts in connection with the combustion chamber for conduction of a flue gas stream to an outlet, at least one duct being essentially vertically disposed, which SCR-system comprises an SCR-unit (8) comprising at least one SCR-reactor module (3) for reducing an amount of NOₓ in the flue gas stream, configured for operative and fitting placement within the vertical duct (1c), and a filtering screen unit (4) comprising at least one filtering screen (41, 42) for filtering-out ash particles from the flue gas stream prior to entry into the SCR-unit, configured to protectively cover the SCR-unit, wherein at least one through-passage (5) is provided within or along an outer edge of the SCR-unit such that the flue gas stream bypasses the SCR-unit, the at least one filtering screen is disposed inclined with respect to a horizontal plane, and the at least one through-passage and the at least one filtering screen are configured for arrangement in the vertical duct such that at least part of the filtered-out ash slides downwards across the filtering screen and passes through the through-passage. The invention furthermore relates to a combustion system comprising such an SCR-system and a method for retroactively fitting such an SCR-system exclusively within the vertical duct.

## Description

### Field of the application

The application relates to prolonging the active life time of a selective catalytic reduction (SCR)-system that is provided to remove NOₓ from the flue gas stream produced in a combustion system having a combustion chamber and an arrangement of ducts in connection with the combustion chamber for conduction of the flue gas stream to an outlet, of which at least one duct is essentially vertically disposed, this by removing at least part of the ash from the flue gas stream before it reaches the SCR-system.

### Background of the application

In high temperature thermal processes performed in combustion systems such as for instance power boilers where steam is generated for the production in power plants or waste incinerators, flue gas streams are produced containing polluting components to the atmosphere such as nitrous oxides (NOₓ) and sulfur oxides (SOₓ) which must be removed from the produced flue gases before these are discharged into the environment.

The standard for removing nitrous oxides from flue gases is the SCR-process using an SCR-catalyst (also called a DeNOₓ catalyst), where a reducing agent, typically ammonia, is injected and mixed into the flue gases, and sent through a catalytic reactor where the catalyst facilitates the reduction of NOₓ using the reducing agent to form elemental nitrogen (N₂) and water.

The flue gases from the combustion processes furthermore typically contain fly ash particulates (also known as pulverised fuel ash) formed during the combustion process. This ash may stick together or in power boilers may stick to the heating surfaces of the different heat exchangers, or can even sinter together. If the combustion system is not running in full load, there can be accumulation of the ash due to lower velocity. If the load of the combustion system is then increased again, the ash may accumulate in the SCR catalyst or in or on various components of an SCR system. Ash that has been sticking together on a surface may crack and bigger particles can drop down. The ash can range from a fine powder to Large Particle Ash (LPA also known as "popcorn ash", from about 0.1 cm to about 2.5 cm), that can even further develop into large chunky pieces (from about 2.5 cm to about 13 cm or even larger), for instance when it accumulates in or on the SCR catalyst surface and passageways or on components of an SCR system. The various types of ash are formed in the combustion system and can easily be carried over into the SCR system causing accumulation and plugging of the various components of the SCR system. SCR catalysts typically are equipped with a plate or honeycomb-type catalyst and may have a pitch or opening ranging up to 8 millimeters. A part of the ash particles, and especially the LPA particles, are larger than the openings of the SCR catalyst. As a consequence, the SCR catalysts becomes plugged on the inlet grid and after longer operation times also between the plates in case of a plate type catalyst and in the channels in case of a honeycomb type catalyst. This may result in misdistribution of the flue gas, loss of catalytic performance through loss of available DeNOₓ, potential, unacceptable NH₃ slip, excessive pressure drop and catalyst erosion damage.

Therefore, the SCR system must frequently be cleaned using for instance soot blowers or ultrasound. Despite of the cleaning, the tendency for the channels of the SCR catalysts of the SCR system to become obstructed or clogged stays, and in particular in such a way that after a certain time period, the obstructions can no longer be removed using with conventional cleaning methods.

Removal of ash from the flue gas may involve various technologies depending on the physical properties of the ash. The physical properties of the fly ash varies depending on the fuel type and the operating conditions in the thermal processes.

Fine powder ash may be removed using Electro Static Precipitators (ESP), which are typically installed upstream and/or downstream of the SCR system depending on the SCR arrangement, (i.e., high dust, low dust or tail end arrangement).

LPA can be collected prior to the SCR-reactor by means of LPA screens, which are typically located in the flue gas stream between the economizer outlet and the SCR inlet. These techniques however may not be sufficiently efficient to remove the ash in order to protect the SCR catalyst or the various components of the SCR system from plugging by or accumulation of fly ash particulates, which can lead to premature loss of SCR performance. For example, loose powder can plug channels of honeycomb-type and corrugated-type catalysts with individual channels becoming partially or fully inaccessible to flue gas. Furthermore, chunky fly ash particulates and LPA can deposit on top of the catalyst module or on other components of the system, blocking the flue gas passage through honeycomb-, plate-, or corrugated-type SCR catalyst modules and access to the catalytic surfaces. Popcorn ash can travel into the channels of honeycomb, corrugated, or plate SCR catalysts and deposit in the channel where it can become wedged between the channel walls, blocking flue gas flow and providing an environment for further fly ash particulates to accumulate and plug the channel.

Despite the above mentioned technologies, the ash removal may not be sufficient to protect the SCR catalyst or the various components of the SCR system from plugging by or accumulation of fly ash particulates, which can lead to premature loss of SCR performance. For example, loose powder can plug channels of honeycomb-type and corrugated-type catalysts with individual channels becoming partially or fully inaccessible to flue gas. Furthermore, chunky fly ash particulates and LPA can deposit on top of the catalyst module or on other components of the system, blocking the flue gas passage through honeycomb-, plate-, or corrugated-type SCR catalyst modules and access to the catalytic surfaces. Popcorn ash can travel into the channels of honeycomb, corrugated, or plate SCR catalysts and deposit in the channel where it can become wedged between the channel walls, blocking flue gas flow and providing an environment for further fly ash particulates to accumulate and plug the channel. The result can be a catalyst with pluggage ranging from 5% to 100% and reduced NOₓ removal efficiency. In addition, it is generally known in the regeneration of SCR catalysts that the physical cleaning of the catalyst to remove any loose fly ash accumulated on the module frame, box frame, on top of the catalyst and within the various passageways of the catalyst, for example plugs within the catalyst channels, is an important step prior to a subsequent wet chemical based regeneration process.

Removal of fly ash plugs prior to wet-chemical regeneration ensures that loose, fly ash particulates are not carried into the treatment tanks or accumulate in the chemical solutions used during the regeneration processes where the fly ash particulates could potentially cause problems, such as plugged equipment, damaged equipment due to the abrasive effects of the fly ash and a reduced effectiveness of the chemicals in the process. Therefore, reducing the amount of loose fly ash particulates results in decreased discharge rates of chemical solutions, savings in chemical solutions, and preventing mechanical failures due to abrasive corrosion. Further, removal of the fly ash prior to wet-chemical treatment may also decrease the accumulation of catalyst poisons, such as iron, in the treatment tanks.

To address the problem, equipment manufacturers and utilities have experimented with various types of LPA screens, i.e. hard-framed screens, straight and angled flats screens, and straight but flexible curtain-type screens. For years, none appeared capable of performing satisfactorily in the long term. These known LPA-screens are typically installed between the combustion system and the SCR system in an external reactor.

In US 2005/0268584, an arrangement for separating coarse ash particles from a flue gas stream is disclosed, the arrangement comprising at least one separation module that is in the form of a block and has a plurality of through-channels disposed next to one another in the manner of a screen. The through channels form passage for the passage of flue gas, and each through channel has a cross-sectional area that is less than a cross-section of the coarse ash particles that are to be separated or removed. A plurality of frames, each with a screen comprised of a plurality of separation modules, are disposed in an installation plane transverse to the direction Y of the flue gas stream, in other words, in an X-Z planes. The arrangement of a plurality of frames to form a large-surface separation curtain is in the connection preferably selected such that the cross-section of the flue gas channel, which at the installation location is square or rectangular, is covered as completely as possible by separation modules.

In US 2006/0210456, an arrangement for separating coarse ash out of a flue gas stream is disclosed, comprising a catalytic converter disposed in a widened flue gas channel portion and serving for reducing the NOₓ-level in the flue gas stream. Also disposed in the widened channel portion is a separator sieve that extends essentially over the entire cross-section of the widened channel. The separator sieve is provided with a plurality of openings for the passage of flue gas there through. Each opening has a cross-section that is smaller than a cross-section of coarse ash particles that are to be separated out.

In US 8,425,850, a LPA mitigation arrangement for use in coal-fired plant having a SCR-reactor, a flue gas stream and an SCR apparatus is described. The arrangement is positioned in a region of ductwork with a reduced gas flow such as the SCR-reactor. The SCR-reactor has an inlet sidewall on the upstream side. The mitigation arrangement comprises a plurality of screens positioned near the top of the SCR-reactor above the SCR apparatus, the screens arranged across a portion of the flue gas flow on the inlet side of the SCR-reactor in the shape of a trough. The screens are positioned relative to one another to direct the LPA downward toward an aperture for removal. Furthermore, a screen cleaning apparatus is provided comprising at least one of a rapper and/or a soot blower.

There exists the need to provide a combustion system having an SCR system that can directly be placed inside a vertical duct of the combustion system, and does not have to be placed in an external SCR-reactor unit, but wherein still the problems created by the ash in the flue gas stream conducted through the flue gas ductwork of the combustion system is solved. There furthermore exists the need for a retrofitting system that does not require the wall of the combustion system to be substantially cut, which is a requirement when an external SCR-reactor is used. There also exists the need for a combustion system with an SCR-system having a minimum bypass.

### Summary of the invention

According to a first aspect of the present application, an SCR-system for a combustion system having a combustion chamber and an arrangement of ducts in connection with the combustion chamber for conduction of a flue gas stream to an outlet, at least one duct being essentially vertically disposed, is disclosed, which SCR-system comprises:
- an SCR-unit comprising at least one SCR-reactor module for reducing an amount of NOx in the flue gas stream, configured for operative and fitting placement within the vertical duct; and
- a filtering screen unit comprising at least one filtering screen for filtering-out ash particles from the flue gas stream prior to entry into the SCR-unit, configured to protectively cover the SCR-unit;
wherein
- at least one through-passage is provided within or along an outer edge of the SCR-unit such that the flue gas stream bypasses the SCR-unit;
- the at least one filtering screen is disposed inclined with respect to a horizontal plane, and
- the at least one through-passage and the at least one filtering screen are configured for arrangement in the vertical duct such that at least part of the filtered-out ash slides downwards across the filtering screen and passes through the through-passage.

This design has the advantage that no additional construction and especially no cutting of the wall of the combustion system is necessary to install the SCR system and the ash screens since a vertical duct of the combustion system itself is used for the installation of the SCR system and the ash screen construction as described above. The through-passage that are arranged within or along an outer edge of the SCR-unit are themselves used to remove and eliminate the ash that is filtered-out by the filtering screen unit.

Furthermore, no additional ash collection system needs to be provided for collecting the ash that is collected on the screens since the ash is discharged between the different pairs of catalyst modules. The ash that slips off the filtering screens and passes through the through-ducts is collected by the existing ash removal system of the combustion system.

In a possible embodiment of an SCR system according to the application,
- the SCR-unit comprises a plurality of SCR-reactor modules arranged so as to provide a plurality of essentially parallel longitudinal gaps there between from which one or more of the through-passages is formed, the through-passage optionally are longitudinal in a horizontal plane; and
- the one or more of the through-passages and the at least one filtering screen are configured such that each through-passage receives filtered out ash from one or two filtering screens.

The plurality of SCR-reactor modules optionally are arranged side-by-side.

At least one of the through-passages optionally are formed from a longitudinal gap between two adjacent SCR-reactor modules.

The through-passages optionally are longitudinal in a horizontal plane.

In a possible embodiment of an SCR-system according to the application, at least one of the through-passages is formed from a gap between an SCR-reactor module and an inner side wall of the vertical duct.

In a possible embodiment of an SCR-system according to the application, at least one of the through-passages have a maximum width of between about 2 and 30 mm.

Optionally, all of the through-passages have a maximum width of between 2 and 30 mm.

In a possible embodiment of an SCR-system according to the application, at least one of the through-passages in longitudinal in a horizontal plane, is flanked by a pair of SCR-reactor module upper edges, and at least one of the flanking SCR-reactor module upper edges is provided with a sliding protection to prevent slippage of a lower filtering screen edge in contact with the corresponding SCR-reactor module.

In an embodiment of an SCR-system according to the application, at least one of the filtering screens is planar and each disposed inclined at an angle of 30 to 85 degrees with respect to a horizontal plane.

Optionally all of the filtering screens are planar and each disposed inclined at an angle of 30 to 85 degrees with respect to a horizontal plane.

In a possible embodiment of an SCR-system according to the application, at least one and optionally all of the filtering screens are formed from
- a single mesh screen, or
- multiple mesh screens wherein sealing is provided between adjacent mesh screens.

The single mesh screen or multiple mesh screens optionally each have a mesh size of between about 4 mm and 6 mm.

In a possible embodiment of an SCR-system according to the application, at least one of the longitudinal gaps is sealed, which sealed longitudinal gap does not from a through-passage.

In an possible embodiment of an SCR-system according to the application, a pair of filtering screens is arranged so as to form a gable-roof structure having an upper apex edge and two lower filtering screen edges, each lower filtering screen edge being disposed in relation to a separate through-passage to deposit filtered-out ash there through.

The upper apex edge and the two lower filtering screen edges optionally are all parallel.

The pair of filtering screens of the gable-roof structure optionally are mutually hinged at the upper apex edge. This hinge allows to clap together the filtering screens in case of a need for inspection of the catalysts lying beneath or to be able to take samples of the catalyst, mostly on a yearly basis. In case of boiler washing, the filtering screens can be clapped open forming a substantially horizontal surface to cover the catalysts lying beneath.

The gable-roof structure optionally protectively covers at least two SCR-reactor modules.

In a possible embodiment of an SCR-system according to the application, the SCR-system further comprises a closing screen disposed at one or each end of the gable-roof structure in an essentially vertical orientation, dimensioned to cover the one or each end.

Each of the closing screens is optionally formed from a planar mesh screen.

The planar mesh screens optionally have a mesh size of between about 4 mm and 6 mm.

In a possible embodiment of an SCR-system according to the application, the filtering screen unit comprises a plurality of the gable-roof structures arranged side-by-side, and the lower filtering screen edges of the gable-roof structures are disposed in relation to a plurality of through-passages to deposit filtered-out ash there through.

In a possible embodiment of an SCR-system according to the application, at least one of the filtering screens is planar having an upper edge configured to abut an inner wall of the vertical duct to form a lean-to roof structure, and a lower edge being disposed in relation to a through-passage to deposit filtered-out ash there through.

The lean-to roof structure optionally protectively covers only one SCR-reactor module, this optionally at a periphery of the SCR-unit.

Optionally, a closing screen is arranged disposed at one or each end of the lean-to roof structure in an essentially vertical orientation, dimensioned to cover the one end or each of the ends.

The closing screen is optionally formed from a planar mesh screen.

The planar mesh screens optionally have a mesh size of between about 4 mm and 6 mm.

In a possible embodiment of an SCR-system according to the application, the SCR-system comprises at least two SCR-units each provided with a separate complementary filtering screen unit, each layer comprising an SCR-unit and a complementary filtering screen unit.

The complementary filtering screen units optionally are configured for disposing as separate layers within the vertical duct.

Each of the layers is optionally disposed essentially horizontally.

The SCR-system can be configured such that the through-passages in each SCR-unit of each layer are mutually aligned, or in other words the through-passages in a first layer positionally coincide with through-passages in an adjacent layer.

The SCR-system can also be configured such that the through-passages in each SCR-unit of each layer are mutually staggered, or in other words the through-passages in a first layer positionally coincide with surface of SCR-reactor modules in an adjacent layer or with a sealed through-passages in an adjacent layer.

According to a second aspect of the present application, a combustion system is disclosed comprising a combustion chamber and an arrangement of ducts in connection with the combustion chamber for conduction of a flue gas stream to an outlet, at least one duct being essentially vertically disposed, provided in the vertical duct with an SCR-system according to the application as described above.

The combustion system optionally is a power boiler or a waste incinerator.

According to a third aspect of the application, a method for retroactively fitting an SCR-system for reducing an amount of NOₓ in a flue gas stream to a combustion system having a combustion chamber and an arrangement of ducts in connection with the combustion chamber for conduction of the flue gas stream to an outlet, at least one duct being essentially vertically disposed, is described, the method comprising the step of installing an SCR-system according to the application as described above exclusively within the vertical duct.

This set up allows to be directly installed in the second and/or the third draft of the boiler. There is no need for any additional SCR-reactor construction.

### Brief description of the figures

FIG. 1 shows a schematic view of a power boiler which is provided with an SCR unit provided in the second boiler draft and arranged with a screen construction to remove ash from the flue gas conducted through the flue gas ductwork of the boiler according to the present application;
FIG. 2 shows a schematic detailed view of a first embodiment of an SCR unit provided with a screen construction according to the present application;
FIG. 3 shows a schematic detailed view of a second embodiment of an SCR unit provided with a screen construction according to the present application;
FIG. 4 shows a perspective top view of a catalyst module as applied in the present application;
FIG. 5 shows a perspective top view of a screen construction according to the present application that is installed directly upstream the SCR unit.

### Detailed description of the invention

Before the present system of the application are described in more detail, it is to be understood that this application is not limited to particular systems or combinations described, since such systems and combinations may, of course, vary. It is also to be understood that the terminology used herein is not intended to be limiting, since the scope of the present application will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or openended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, specifically +/-5% or less, more specifically +/-1% or less, and still more specifically +/-0.1% or less of and from the specified value, insofar such variations are appropriate to perform in the disclosed application. It is to be understood that the value to which the modifier "about" or "approximately" refers is itself also specifically disclosed.

Whereas the terms "one or more" or "at least one", such as one or more or at least one member(s) of a group of members, is clear per se, by means of further exemplification, the term encompasses inter alia a reference to any one of the members, or to any two or more of the members, such as, e.g., any ≥3, ≥4, ≥5, ≥6 or ≥7 etc. of the members, and up to all the members.

All references cited in the present specification are hereby incorporated by reference in their entirety. In particular, the teachings of all references herein specifically referred to are incorporated by reference.

Unless otherwise defined, all terms used in disclosing the application, including technical and scientific terms, have the meaning as commonly understood by one of ordinary skill in the art to which this application belongs. By means of further guidance, term definitions are included to better appreciate the teaching of the present application.

In the following passages, different aspects of the application are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present application. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the application, and form different embodiments, as would be understood by those in the art. For example, in the appended claims, any of the claimed embodiments can be used in any combination.

In the present description of the application, reference is made to the accompanying drawings that form a part hereof, and in which are shown by way of illustration only of specific embodiments in which the application may be practiced. Parenthesized or emboldened reference numerals affixed to respective elements merely exemplify the elements by way of example, with which it is not intended to limit the respective elements. It is to be understood that other embodiments may be utilized and structural or logical changes may be made without departing from the scope of the present application. The following detailed description, therefore, is not to be taken in a limiting sense, and the scope of the present application is defined by the appended claims.

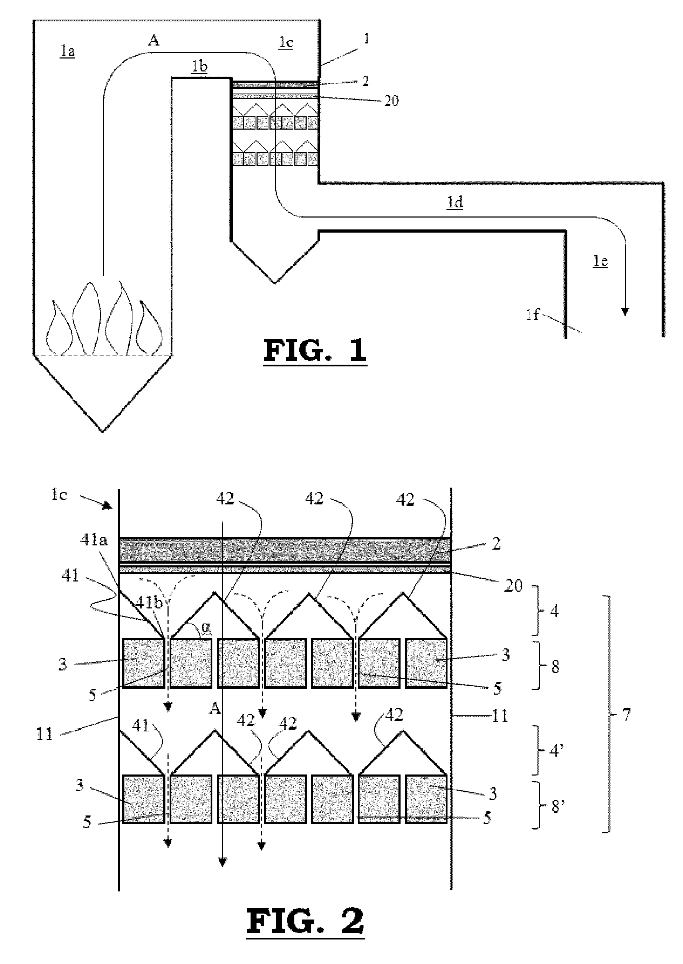

In figure 1, a combustion system in the form of a power boiler (1) is shown as an exemplary embodiment. It must be noted that this exemplary embodiment is not limitative to the scope of the application.

A combustion system in general is provided with a combustion chamber and an arrangement of ducts that are in connection with the combustion chamber for conduction of a flue gas stream to an outlet. At least one of the ducts is essentially vertically disposed. Said vertical duct is different from a duct containing the combustion chamber.

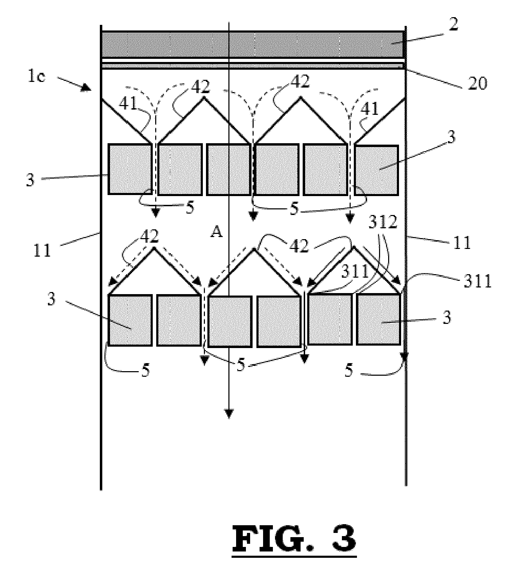

In the power boiler (1) as shown in FIG. 1, the combustion chamber for burning fossil fuel is arranged in a first vertical duct (1a). Downstream the first vertical duct (1a), a second vertical duct (1c) is provided including one or more heat exchangers (2). This second vertical duct (1c) is connected to the first vertical duct (1a) via a third horizontal duct (1b). The heat exchangers (2) that are provided in the second vertical duct (1c) contain more specifically economizers which are heat exchange devices that heat fluids, usually water, up to, but normally not beyond the boiling point of that fluid. Economizers are so named because they can make use of the enthalpy in fluid streams that are hot, but not hot enough to be used in a boiler, thereby recovering more useful enthalpy and improving the boiler's efficiency. They are devices fitted to the power boiler (1) which save energy by using the exhaust gases from the power boiler (1) to preheat the cold water circulating therein. The economizer(s) (2) are supported by a supporting beam (20). The second duct (1c) is connected with a vertical exit duct (1e) of the power boiler (1) through a fourth horizontal duct (1d). Through the combustion of the fossil fuel, a flue gas stream (A) is produced that travels through the different ducts (1a - 1e) of the power boiler (1) and finally exits the power boiler (1) through an outlet (If) arranged in the exit duct (1e). The passage of ash through the second duct (1c) of the boiler (1) is indicated with dashed lines on FIGs. 2 and 3.

A selective catalyst reduction (SCR)-system (7) is positioned downstream of the combustion chamber in the second vertical duct (1c). In the presence of heat exchangers (2), the SCR-system (7) is more in particular positioned downstream these heat exchangers (2). The SCR-system (7) contains catalyst of a known type which functions to reduce oxides of nitrogen (NOₓ) in the flue gas to nitrogen and oxygen. An SCR-system (7) according to the application comprises at least one SCR-unit (8, 8') comprising at least one SCR-reactor module (3). It is remarked that it is also possible to provide more than one such SCR-unit (8, 8') with an SCR-system. It is furthermore remarked that an SCR-unit (8, 8') may comprise a plurality of SCR-reactor modules (3) that more specifically are arranged side-by-side. The one or more SCR-units (8, 8') are configured for operative and fitting placement within the second vertical duct (1c), more specifically, they are configured for fitting exclusively (only) within a void space of the second vertical duct (1c). The SCR-units (8, 8') are each dimensioned essentially for occlusion of the second vertical duct (1c). It is remarked that for instance in a waste incinerator, the SCR-system according to the application can be positioned in a third vertical duct that is downstream the first vertical duct.

During the combustion of the fossil fuel, amongst others (fly) ash is produced that is carried along with the flue gas stream. As used herein, the term "ash" refers to solid-phase combustion byproducts including from a fine powder to Large Particle Ash (LPA also known as "popcorn ash", having a particle size from 0.1 cm to about 2.5 cm), which can even develop further into large chunk pieces (having a particle size from about 2.5 cm to about 13 cm or even larger). In order to remove the ash from the flue gas that is conducted throughout the second vertical duct (1c) in order to protect the SCR system against fouling and clogging, a filtering screen unit (4, 4') is arranged upstream each of the one or more SCR-units (8). Each of the filtering screen units (4, 4') comprises at least one filtering screen (41, 42) for filtering out ash particles from the flue gas stream prior to entry into the SCR-unit (8, 8') and configured to protectively cover the respective SCR-unit (8, 8'). The filtering screens (41, 42) are disposed inclined with respect to a horizontal plane.

Within or along an outer edge of each of the SCR-units (8, 8'), a plurality of through-passages (5) are provided such that the flue gas stream bypasses the SCR-units (8, 8'). The through-passages (5) and the filtering screens (41, 42) are configured for arrangement in the second vertical duct (1c) such that at least part of the filtered-out ash slides downwards across the filtering screen (41, 42) and passes through the respective through-passages (5).

The ideal width of the through-passages (5) should be
- large enough to allow ash particles fall through the through-passages (5) that are situated between the respective SCR-reactor modules (3); but
- small enough to reduce ammonia(NH₃) slip and to have sufficient NOₓ cleaning after the SCR-reactor system.

For example, for standard SCR-reactor modules (3) having a dimension of approximately height: from 700 to 2.400 mm x length: 1.880 mm x width: 1.560 mm, the width of the through-passages (5) is typically between about 2 mm to 30 mm.

The one or more filtering screen units (4, 4') can comprise one or more filtering screens (42) in the form of a gable-roof structure comprising two filtering screen parts (421, 422) that are connected to each other at an upper apex edge (42a) and each have a lower filtering screen edge (421a, 422a). Each of the lower filtering screen edges (421a, 422a) is disposed in relation to a respective through-passage (5) to deposit filtered-out ash there through. The upper apex edge (42a) and the two lower filtering screen edges (421a, 422a) are optionally parallel.

Optionally, the two filtering screen parts (421, 422) of the gable-roof structure are mutually hinged at the upper apex edge (42a). It is remarked that this hinge can be executed in different ways. As an example (not shown on the figures), if the available space is limited, the hinge may be formed from a rod provided at one filtering screen part (421) and a half of a shell provided at the other filtering screen part (422) that fits over the rod and that can be brought together to form the hinge but also can be again detached again from each other.

A gable-roof structure more in particular covers at least two SCR-reactor modules (3), and more specifically two neighboring SCR-reactor modules (3).

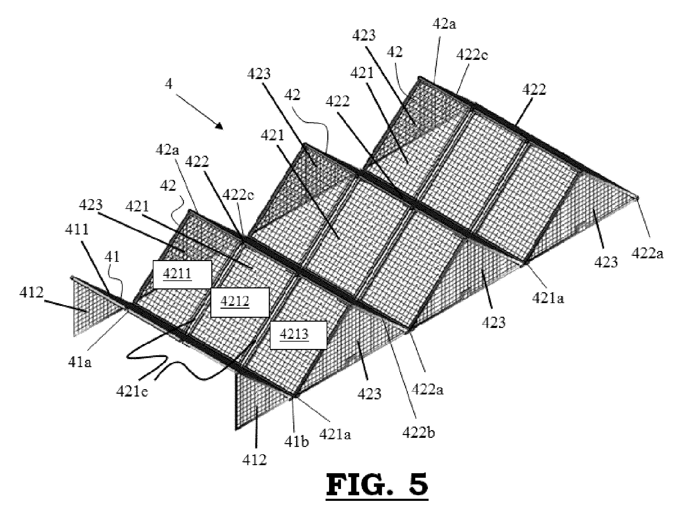

The filtering screen unit can comprise a plurality of such gable-roof structures arranged side-by-side, in which the pairwise lower filtering screen edges (421a, 422a) are adjacent, as can be seen in figure 5. The lower filtering screen edges (421a, 422a) of the plurality of gable-roof structures are disposed in relation to the plurality of respective through-passages (5) to deposit filtered-out ash there through.

Furthermore, the one or more filtering screen units (4, 4') can comprise one or more filtering screens (41) that contain only one filtering screen part (411) having an upper filtering screen edge (41a) to abut an inner wall of the second vertical duct (1c) to form a lean-to roof structure, and a lower filtering screen edge (411b) being disposed in relation to a respective through-passage (5) to deposit filtered-out ash there through. This lean-to roof structure more in particular protectively covers only one SCR-reactor module (3), as can be seen in figures 2 and 3, this more in particular at a periphery of the SCR-unit (8, 8').

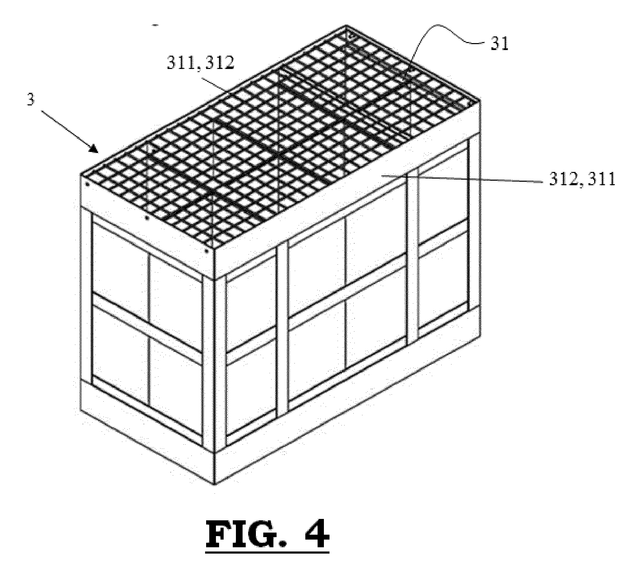

The lower filtering screen edges (421a, 422a) of the filtering screens (41, 42) are more in particular arranged in relation to the through-passages (5) to deposit filtered-out ash there through. More in particular, the lower filtering screen edges (421a, 422a) contact the SCR-units (8, 8') adjacent to the respective through-passages (5) such that the through-passages (5) receive filtered-out ash from the filtering screens (41, 42). As can be seen in figure 4, an SCR-module (3) in general has a flat-lying cuboid form resulting in through-passages (5) between the different SCR-reactor modules (3) being longitudinal in a horizontal plane and being flanked by a pair of SCR-reactor module upper edges (311, 312). In order to prevent slippage of the lower filtering screen edges (421a, 422a) from the SCR-reactor module upper edges (311, 312), the SCR-reactor module upper edges (311, 312) can be provided with a sliding protection.

The filtering screens (41, 42) more in particular are each planar and are each disposed inclined at an angle (α) (as indicated in FIG. 2) of 30 to 85 degrees, more specifically between 40° and 60° and most specifically between 45° and 55° with respect to a horizontal plane. The filtering screens (41, 42) have a plurality of openings that allow passage of the flue gas stream (indicated with arrow A on FIGs. 2 and 3) through it, but have a cross-sectional area that is less than the cross-section of the ash particles that need to be filtered-out in order to avoid them into contact with the SCR-reactor modules (3).

The filtering screens (41, 42) can be formed from a single mesh screen (not shown on the drawings), or can be formed from multiple mesh screens (4211, 4212, 4213) wherein sealing (421e) is provided between adjacent mesh screens (4211, 4212, 4213), as can be seen in figure 5.

As can be seen in figure 5, each of the gable-roof structure filtering screens (42) or the lean-to roof structure filtering screens (41) can comprise a closing screen (423; 412) at one or each end thereof in an essentially vertical orientation and dimensioned to cover the one or both ends. These closing screens (423; 412) can be formed from a planar mesh screen.

All planar mesh screens (411, 412, 421, 422, 423) more in particular have a mesh size of between about 4 mm and 6 mm. Apart from mesh screens, also perforated plates or wedge wires, preferably in stainless steel, can be used.

The SCR-system (7) as shown in FIGs. 1 to 3 comprises two SCR-units (8, 8') each comprising a plurality of SCR-reactor modules (3) arranged side-by side for reducing an amount of NOₓ in the flue gas stream (A). Between two adjacent SCR-reactor modules (3), a gap is present. The through-passages (5) are formed from these gaps. Between the outer SCR-reactor module (3) of an SCR-unit (8, 8') and the inner side wall (11) of the second vertical duct (1c), also a gap is provided that can serve as a through passage (5) for filtered-out ash sliding down from the respective filtering screen (42). In case a gap is not used as a through-passage (5), the gap is more in particular sealed.

As can be seen in figures 1 to 3, each of the SCR-units (8, 8') is provided with a separate complementary filtering screen unit (4, 4'). The SCR-units (8, 8') and the complementary filtering screen units (4, 4') are configured for disposing as separate layers within the second vertical duct (1c), wherein each layer comprises an SCR-unit (8, 8') and a complementary filtering screen unit (4, 4'). Each of the layers is more in particular disposed essentially horizontally. As can be seen in figure 2, the through-passages (5) in each SCR-unit of each layer can be mutually aligned, or in other words, the through-passages (5) in a first layer positionally coincide with the through-passages (5) in an adjacent layer. As can be seen in figure 3, the through-passages (5) can also be staggered, or in other words, the through-passages (5) in a first layer positionally coincide with a surface of SCR-reactor modules in an adjacent layer or with a sealed through-passages in an adjacent layer. In case of gable-roof structure filtering screens (42), the through-passages of a first upper layer can be aligned with apexes of the gable-roof structure of a second adjacent lower layer, or in other words, the through-passages in a first layer upper positionally coincide with apexes of the gable-roof structure of a second adjacent lower layer such that ash passing through the through-passages of a first upper layer falls substantially onto the apexes of the gable-roof structure of the second lower layer.

The ash passes with the force of flue gas and/or gravity through the through-passages (5) towards an existing ash-discharge system (not shown on the figures) from the boiler (1).

A method for retroactively fitting an SCR-system (7) according to the application as described above to a combustion system having a combustion chamber and an arrangement of ducts in connection with the combustion chamber for conduction of a flue gas stream to an outlet, wherein at least one of the ducts is essentially vertically disposed, comprises the step of installing the SCR-system according to the application exclusively within the respective vertical duct. In a power boiler, this vertical duct will in general be a second vertical duct (1c), while in a waste incinerator, this vertical duct is in general a third vertical duct (not shown on the figures), these vertical ducts being downstream a first vertical duct (1a) comprising the combustion chamber.

## Claims

1. SCR (selective catalytic reduction)-system for a combustion system having a combustion chamber and an arrangement of ducts in connection with the combustion chamber for conduction of a flue gas stream to an outlet, at least one duct being essentially vertically disposed, which SCR-system comprises:
- an SCR-unit comprising at least one SCR-reactor module for reducing an amount of NOₓ in the flue gas stream, configured for operative and fitting placement within the vertical duct, and
- a filtering screen unit comprising at least one filtering screen for filtering-out ash particles from the flue gas stream prior to entry into the SCR-unit, configured to protectively cover the SCR-unit,
wherein
- at least one through-passage is provided within or along an outer edge of the SCR-unit such that the flue gas stream bypasses the SCR-unit,
- the at least one filtering screen is disposed inclined with respect to a horizontal plane, and
- the at least one through-passage and the at least one filtering screen are configured for arrangement in the vertical duct such that at least part of the filtered-out ash slides downwards across the filtering screen and passes through the through-passage.

2. SCR-system according to claim 1, wherein
- the SCR-unit comprises a plurality of SCR-reactor modules arranged so as to provide a plurality of essentially parallel longitudinal gaps there between from which one or more of the through-passages is formed, wherein
• the plurality of SCR-reactor modules optionally are arranged side-by-side;
• at least one of the through-passages optionally are formed from a longitudinal gap between two adjacent SCR-reactor modules; and
• the through-passages optionally are longitudinal in a horizontal plane; and
- the one or more of the through-passages and the at least one filtering screen are configured such that each through-passage receives filtered out ash from one or two filtering screens.

3. SCR-system according to claim 1 or 2, wherein at least one of the through-passages is formed from a gap between an SCR-reactor module and an inner side wall of the vertical duct.

4. SCR-system according to any one of claims 1 to 3, wherein at least one, and optionally all of the through-passages have a maximum width of between 2 and 30 mm.

5. SCR-system according to any one of claims 1 to 4, wherein at least one of the through-passages is longitudinal in a horizontal plane, is flanked by a pair of SCR-reactor module upper edges, and at least one of the flanking SCR-reactor module upper edges is provided with a sliding protection to prevent slippage of a lower filtering screen edge in contact with the corresponding SCR-reactor module.

6. SCR-system according to any of claims 1 to 5, wherein at least one, optionally all of the filtering screens are planar and each disposed inclined at an angle of 30 to 85 degrees with respect to a horizontal plane.

7. SCR-system according to any of claims 1 to 6 wherein at least one, optionally all of the filtering screens are formed from
- a single mesh screen, or
- multiple mesh screens wherein sealing is provided between adjacent mesh screens,
wherein the mesh screen or multiple mesh screens optionally each have a mesh size of between 4 mm and 6 mm.

8. SCR-system according to any of claims 1 to 7, wherein at least one of the longitudinal gaps is sealed, which sealed longitudinal gap does not form a through-passage.

9. SCR-system according to claim any of claims 1 to 8, wherein a pair of filtering screens is arranged so as to form a gable-roof structure having an upper apex edge and two lower filtering screen edges, optionally all parallel, each lower filtering screen edge being disposed in relation to a separate through-passage to deposit filtered-out ash there through, wherein
- the pair of filtering screens of the gable-roof structure optionally are mutually hinged at the upper apex edge; and
- the gable-roof structure optionally protectively covers at least two SCR-reactor modules.

10. SCR-system according to claim 9, further comprising a closing screen disposed at one or each end of the gable-roof structure in an essentially vertical orientation, dimensioned to cover the one or each end, wherein each of the closing screens optionally is formed from a planar mesh screen.

11. SCR-system according to claim 9 or 10, wherein
- the filtering screen unit comprises a plurality of the gable-roof structures arranged side-by-side,
- the lower edges of the gable-roof structures are disposed in relation to a plurality of through-passages to deposit filtered-out ash there through.

12. SCR-system according to any of claims 1 to 11, wherein at least one of the filtering screens is planar having an upper edge configured to abut an inner wall of the vertical duct to form a lean-to roof structure, and a lower edge being disposed in relation to a through-passage to deposit filtered-out ash there through, wherein
- the lean-to roof structure optionally protectively covers only one SCR-reactor module, optionally at a periphery of the SCR-unit; and
- further optionally a closing screen is arranged disposed at one or each end of the lean-to roof structure in an essentially vertical orientation, dimensioned to cover the one end or each of the ends, the closing screen optionally being formed from a planar mesh screen.

13. SCR-system according to any of claims 1 to 12, comprising at least two SCR-units each provided with a separate complementary filtering screen unit, wherein the SCR-units and complementary filtering screen units optionally are configured for disposing as separate layers within the vertical duct, each layer comprising an SCR-unit and a complementary filtering screen unit and optionally disposed essentially horizontally, and wherein the SCR-system is optionally configured such that the through-passages in each SCR-unit of each layer are mutually aligned or are mutually staggered.

14. Combustion system comprising a combustion chamber and an arrangement of ducts in connection with the combustion chamber for conduction of a flue gas stream to an outlet, at least one duct being essentially vertically disposed, provided in the vertical duct with an SCR-system according to any of claims 1 to 13, wherein the combustion system optionally is a power boiler or a waste incinerator.

15. Method for retroactively fitting an SCR-system for reducing an amount of NOx in a flue gas stream to a combustion system having a combustion chamber and an arrangement of ducts in connection with the combustion chamber for conduction of the flue gas stream to an outlet, at least one duct being essentially vertically disposed, comprising the step of installing an SCR-system according to any of claims 1 to 13 exclusively within the vertical duct.
